# EUROPEAN PATENT SPECIFICATION

(11) **EP 2 318 793 B1**
(45) Date of publication and mention of the grant of the patent: **30.09.2020**
(21) Application number: 09771098.2
(22) Date of filing: 26.06.2009
(51) Int. Cl.: F25D 25/02, C03C 15/00, C03C 17/30, C03C 19/00

(54) **METHOD FOR SPILL CONTAINMENT AND SHELVES OR THE LIKE THEREFORE**
VERFAHREN ZUR AUFNAHME VON ÜBERGELAUFENEN FLÜSSIGKEITEN UND REGALE ODER DERGLEICHEN DAFÜR
PROCÉDÉ DE RETENUE D'UN LIQUIDE DÉVERSÉ ET RAYONNAGES OU ANALOGUES ASSOCIÉS

(30) Priority: 18.05.2009 US 216540; 27.06.2008 US 133273
(43) Date of publication of application: 11.05.2011
(73) Proprietor: SSW Holding Company, LLC, Dallas, TX (US)
(72) Inventor: DRIVER, John, Patrick, Henryville IN 47126 (US); MCMILLIN, Matthew, Palmyra IN 47164 (US); NALL, Bradley, M., Elizabethtown KY 42701 (US)
(74) Representative: Grünecker Patent- und Rechtsanwälte PartG mbB
(86) International application number: PCT/US2009/048775
(87) International publication number: WO 2009/158567

(56) References cited:
- WO-A1-02/20259
- WO-A2-2006/044641
- GB-A- 1 341 605
- GB-A- 1 341 605
- JP-A- H06 275 109
- JP-A- 2004 308 984
- JP-A- 2008 228 958
- JP-B2- 3 443 751
- US-A- 4 132 824
- US-A- 4 301 213
- US-A- 5 047 563
- US-A- 5 156 611
- US-A- 5 225 274
- US-A- 5 830 529
- US-A1- 2003 179 494
- US-A1- 2004 005 469
- US-A1- 2004 005 469
- US-A1- 2004 056 575
- US-A1- 2005 052 646
- US-A1- 2005 121 782
- US-B1- 6 207 236
- US-B1- 6 472 073

## Description

### BACKGROUND OF THE INVENTION

### Field of the Invention

The invention relates to a shelving assembly comprising a bracket and a shelf, including shelving which may be adapted for use with refrigerators. More particularly, the invention relates to the support surfaces of such articles which have spill containing features.

### Background Art

Previous types of shelving have been developed for use as refrigerator and other shelves. Shelving designs exist in the prior art which include means for containing liquid spills and leaks from a container stored on a shelf, and preventing the spill from dripping from the shelf onto the floor or into other parts of a refrigerator, commonly referred to as "spill proof shelving. For example, Kane, et al, U.S. Patent No. 5,564,809, issued October 14, 1996, discloses a shelf assembly with a shelf panel, a shelf support supporting the panel and a molded one-piece member encapsulating the edge of the shelf panel and a substantial majority of the shelf support.

Herrmann, et al., U.S. Patent No. 5,735,589, issued April 7, 1998, discloses a shelf panel for a refrigerator compartment which includes a shelf panel which is slidably supported for extension and retraction on a support, and which includes slide members which are preferably molded so as to form a rim on an the top article support surface of the shelf panel to contain liquids.

Bird, et al, U.S. Patent No. 5,429,433, issued July 4, 1995, also describes a refrigerator shelf which is adapted for containment of spills on the shelf. The shelf includes a planer shelf with a rim molded around the perimeter edge of the shelf, which projects above the top surface of the shelf to form a dam for containing liquid spills on the shelf.

Meier, et al, U.S. Patent 6,120,720, issued September 19, 2000, discloses a method of manufacturing a glass shelf with a plastic edge for retaining spills on the shelf. The glass shelf panel is placed in a cavity of a mold and plastic material is injected into mold cavities surrounding the glass shelf panel such that a plastic edging is formed around the perimeter of the glass shelf panel.

Additional techniques for containing spills in refrigerator shelving include the use of injection molded plastic, so as to encapsulate a support plate forming the shelf, using plastic molded parts to essentially "sandwich" a support plate between the parts, or using a silicone sealant or various other types of adhesives to form physical spill containment barriers around the perimeter of the refrigerator shelving. In addition to the foregoing, it is known to utilize formed lips or ridges on the surface of the support plate, so as to essentially provide a physical barrier as a liquid retention feature.

Further related prior art is disclosed in US 2005/ 0121782 A1 and US 2004/ 056575 A1.

### SUMMARY OF THE INVENTION

The present invention is defined by independent claims 1 and 18.

These and other objects, advantages and features of the invention will be more fully understood and appreciated by reference to the Description of the Preferred Embodiments, and the appended drawings.

### BRIEF DESCRIPTION OF THE DRAWINGS

Preferred embodiments of the invention will now be described with reference to the drawings, in which:
FIG. 1 is a perspective view of a prior art shelf assembly, utilizing the concept of encapsulation of a shelf for providing spill containment features;
FIG. 2 is a front, sectional view of the shelf assembly shown in FIG. 1, with the absence of the side support arms;
FIG. 3 is a perspective view of a shelf assembly in accordance with a preferred embodiment of the invention with a hydrophobic surface spill containment pattern on the top surface so as to provide for a spill-containing shelf;
FIG. 4 is a front, elevation view of the shelf assembly shown in FIG. 3, with the absence of the side support arms;
FIG. 5 is a perspective view of an alternative embodiment shelf having a different hydrophobic surface spill containment pattern; and
FIG. 6 is a perspective view of an alternative embodiment shelf having yet another different hydrophobic surface spill containment pattern.

### DESCRIPTION OF THE PREFERRED EMBODIMENTS OF THE INVENTION

In the preferred embodiments, the term "shelving and/or the like," or "shelf and/or the like" encompasses shelves. Certain embodiments are especially advantageous for use in refrigerator shelving.

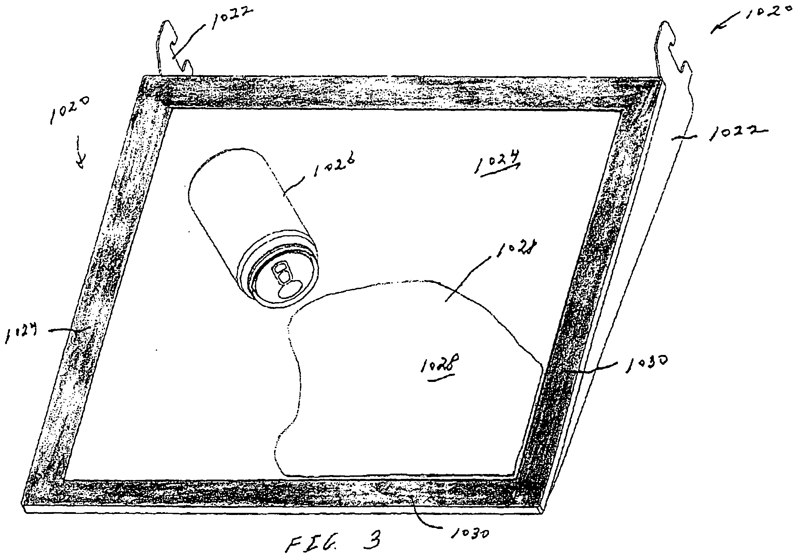

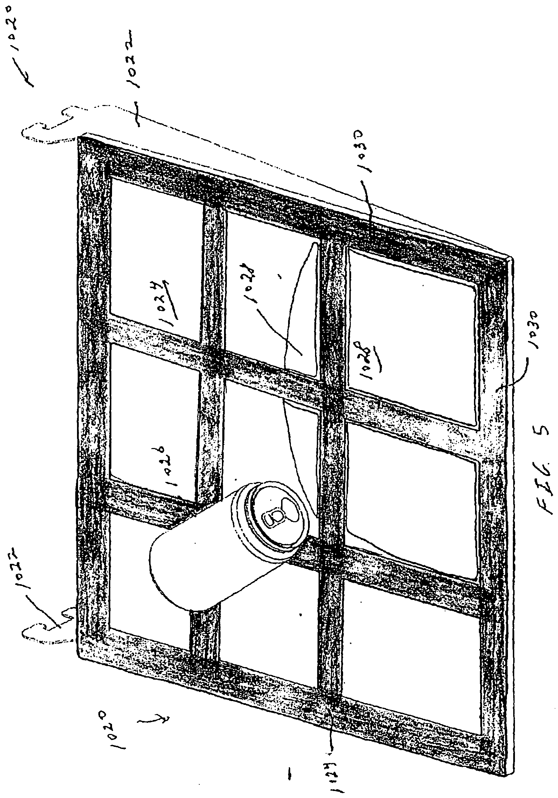

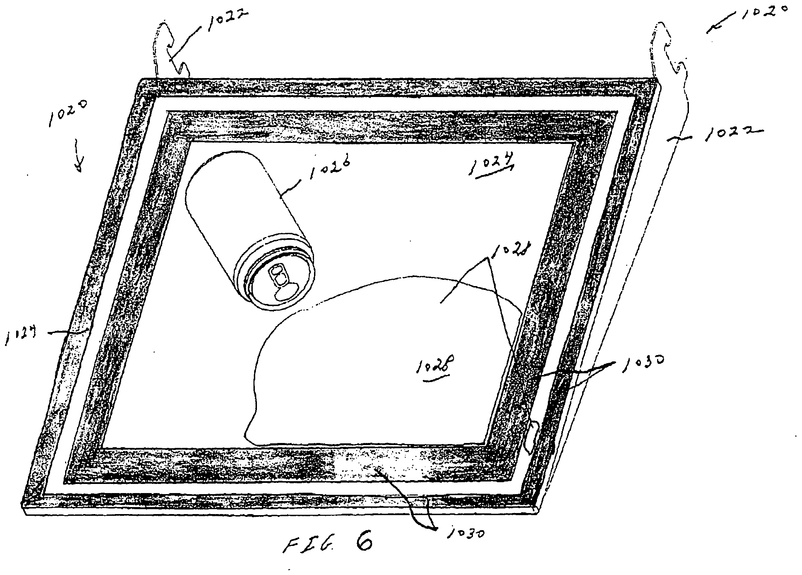

In such preferred embodiments of the invention, refrigerator shelving is provided with a spill containment pattern which may consist of a hydrophobic surface in the pattern of a frame-like border, which defines the boundaries of a single spill containment area therein. The pattern may be a frame-like border which extends along the perimeter of the shelf's top surface (FIG. 3), or it may be spaced from the perimeter and encompass a smaller portion of the top surface, and may include an outer border with a final spill catch area between the inner and outer border (FIG. 6). It may consist of a hydrophobic surface in a grid-like pattern, which pattern defines the boundaries of several spill containment areas therein (FIG. 5). Other variations may occur to those skilled in the art in the practice of the present invention.

According to the invention, the shelf is incorporated into a shelving assembly with a shelf-supporting mechanism, such as a bracket, and a shelf, which is capable of supporting articles on its top surface. The disclosure provided herein relates to the shelf portion of the assembly, which can be used with brackets of various designs, including various types of brackets as known in the art.

The shelf may consist of metal, glass, plastic, other suitable material, or a combination of any of the foregoing, and has a hydrophobic surface which is generally in the plane of the top surface of the shelf and which is arranged in a spill containment pattern to provide a spill containment feature on the top surface of the shelf as illustrated in FIGS. 3-6. The majority of the surface area of the top surface of the shelf is not hydrophobic in nature, and spilled liquids are contained on these non-hydrophobic spill containment areas by the hydrophobic surfaces. The shelves described herein can be adapted for use as a refrigerator shelves.

A hydrophobic or super hydrophobic surface treatment is applied to the shelf s top surface to create the hydrophobic surface described herein in a variety of methods which are known in the art, and any surface coatings may be used which are known to be hydrophobic or are known to make the surface of the shelf hydrophobic. The hydrophobic surface described herein is not limited to any specific hydrophobic or super hydrophobic surface treatment, and any method of making the surface of the shelf hydrophobic may be employed.

More specifically, according to the preferred embodiments, there are several known hydrophobic compounds which may be used with any of the methods described in the prior art. Some of the commonly recognized hydrophobic compounds include: fluorocarbons; fluoroalkyl silanes; fluoroalkoxy silanes; and fluoroalkyl alkyl silanes. Any such hydrophobic compounds or a mixture thereof can be used to create the hydrophobic surfaces described herein, and other applicable hydrophobic compounds will be apparent to those skilled in the art. It is believed that tridecafluoro-1,1,2,2-tetrahydrooctyl trichlorosilane provides a good example of a suitable hydrophobic compound.

More specifically, and further in accordance with the preferred embodiments described herein, methods of creating the hydrophobic surface may include, without limitation: (1) application of a hydrophobic compound to the top surface using any known application technique such as spraying; brushing; wiping; dipping; solvent casting; flow coating; curtain coating; roller coating; spin coating; printing; screen printing; ink jet printing; vacuum coating; magnetic field-assisted cathodic sputtering; plasma deposition; plasma magnetron deposition; plasma or atmospheric CVD; powder or liquid pyrolysis; atomization or chemical vapor deposition; electrophoretic deposition; cross-linking processes; etc.; (2) roughening the surface to be made hydrophobic using various methods (sanding, etching, e.g., acid etching, applying ceramic frit to bind particles on the surface; otherwise binding particles to the surface, etc.) and then applying a hydrophobic compound to the roughened surface; (3) providing a coating of hydrophobic particles on the surface; (4) using sol-gel deposition to apply a hydrophobic compound to the surface, either on top of or within the matrix of the sol-gel; (5) applying a metal oxide primer with an integrated or separate hydrophobic compound; (6) applying a hydrophobic compound comprising a variety of molecular chain lengths to create a coating with surface irregularities; (7) adhering a thin material, such as a tape of thin glass or plastic which has been made hydrophobic to the surface; (8) applying a ceramic frit, with or without structure forming particles as in (2) above, and then applying a hydrophobic compound over the cured frit.

The hydrophobic surface treatments described herein can be cured according to a number of different methods, if curing is required by the surface preparation or the hydrophobic compound, including without limitation: heating; UV radiation; VUV radiation; electron beam irradiation; ionizing radiation; laser; IR; and thermal radiation.

One preferred embodiment of the shelf comprises a glass or tempered glass shelf which is printed, e.g., screen printed, with a ceramic frit material, over which a hydrophobic coating is applied. In accordance with various aspects of the invention, the ceramic frit material can include finely ground glass particles. These particles may be mixed with inorganic or organic pigments, so as to yield a desired color. The coated glass can then be heated to around 621° C (1150° F). This heat treatment will cause the ceramic frit to fuse to the glass surface. It is believed that this coating can be characterized as being nearly as hard and tough as the glass itself. Also, the coated glass with the ceramic frit material is durable, and resists chipping, peeling, fading, and scratching. In addition, the ceramic frit material is substantially resistant to most chemicals.

In one embodiment, the ceramic frit can include some micro- scale additive particles which will remain unmelted at the temperature at which the frit is sintered, as described for example in U.S. Patents 4,591,530 to Lui, 6,872,441 and 6,800,354 to Baurnann, and 5,324,566 and 5,437,894 to Ogawa. The frit is printed in the pattern of a frame-like border at or near the outer perimeter of the shelf s top surface. The shelf with the printed frit is then heated to a temperature above the melting point of the primary components of the frit material, but below the melting point of the glass shelf, for a time sufficient to sinter the frit so that it is bonded to the top surface of the shelf. (The time and temperature required to sinter the frit will vary based on the materials chosen for the frit.) A hydrophobic solution, such as a 1% solution of Tridecafluoro-1,1,2,2-Tetrahydrooctyl Trichloro Silane, a perfluoroalkyl alkyl silane, in hexane, is then applied to the area which has been coated with the frit using any known method such as wiping the solution onto the frit. The hydrophobic solution is then cured by heating it or exposing it to controlled humidity for a period of time. The method described herein will produce a hydrophobic surface that is in a continuous border around the perimeter of the shelf s top surface which will operate as a spill containment feature.

One advantage of using a ceramic frit material to prepare the surface of the shelf for coating with the hydrophobic solution as described herein, in addition to improving the durability of the hydrophobic surface, is that frit material is commercially available in multiple colors and can be printed in a manner which allows for the inclusion of designs, company names or logos in the surface area where the frit material is applied to the shelf.

In accordance with the preferred embodiments, the hydrophobic surface provides a spill containment surface which prevents spilled liquids from leaking off of the shelf s top surface. The hydrophobic surface repels liquids, causing them to collect in the non-hydrophobic region or regions of the shelf. The hydrophobicity of the hydrophobic surface is sufficient to repel a spilled liquid and prevent it from crossing onto or over the hydrophobic surface and therefore forces the spilled liquid to bead up or puddle up on the non-hydrophobic regions of the shelf due to the surface tension of the liquid. Thus, the hydrophobic surface is capable of containing spills without the use of a barrier lip or barrier edging used in prior art spill containment assemblies which act as a "dam" for the spilled liquid.

The reference to the fact that the hydrophobic surface is generally in the plane of the top surface of the shelf is intended to include surfaces and surface treatments, all or a portion of which may extend a small distance above the level of the top surface of the shelf which is not readily noticeable to the naked eye. For example, as described in greater detail above, the hydrophobic surface may be a hydrophobic coating, or a combination of a layer of ceramic frit and a hydrophobic coating on the ceramic frit. Such layers typically have a thickness of from about 0.001 microns to about 250 microns.

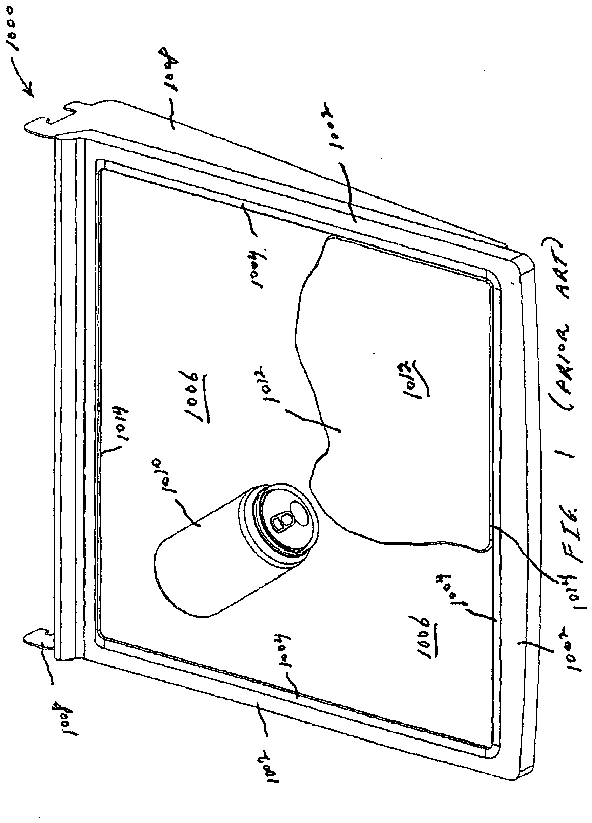

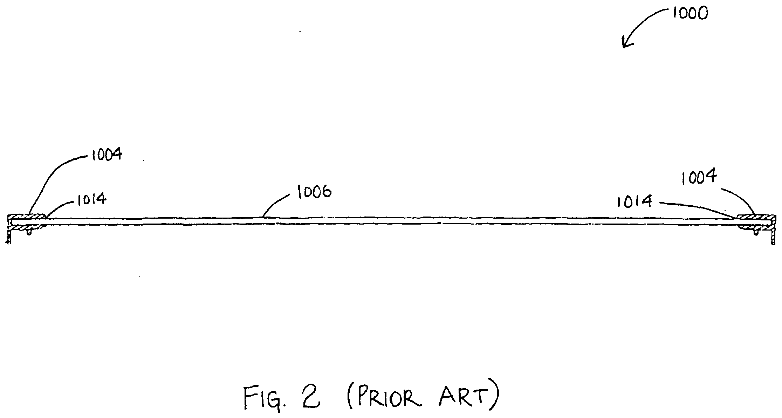

A visual perspective of situations involving liquid spillage is illustrated in FIGS. 1 and 2 which illustrate a prior art shelving assembly 1000. With reference to FIG. 1, the assembly 1000 is shown in fairly simplistic format. The assembly 1000 may include a number of other components, including elements such as shelf supports, which are not relevant to the disclosure provided herein. Specifically, the assembly 1000 includes a frame 1002 which is rectangular in configuration and surrounds and is secured to an inner plastic rim 1004. The plastic rim 1004 is also a rectangular configuration. The plastic rim 1004 is utilized to encapsulate a shelf panel 1006. The shelf panel 1006 could be constructed of glass or similar materials. The frame 1002, plastic rim 1004 and shelf panel 1006 are supported on a pair of opposing side plates 1008.

To illustrate the concepts of liquid spillage, a soda can 1010 is illustrated as being left on its side on the upper surface of the shelf panel 1006. The soda can 1010 has spilled liquid which is shown as liquid 1012 on a portion of the shelf panel 1006. The visible edge of the shelf panel 1006 located on its upper surface at the intersection of the perimeter of the plastic rim 1004 may include a sealed edge 1014. As previously described herein, the sealed edge 1014 may merely include some type of a sealing adhesive or, alternatively, a silicone material or the like. In this manner, an attempt is made to essentially provide a raised physical barrier that is sealed to the shelf panel 1006 to seal the spilled liquid 1012 from spillage off of the shelf panel 1006.

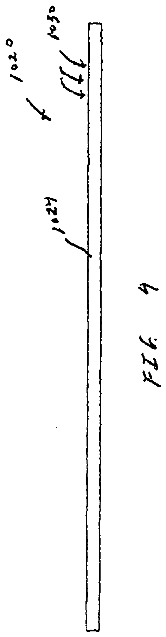

A preferred embodiment shelf assembly 1020 is illustrated in FIGS. 3 and 4. According to the invention, the shelf 1020 is characterized as having a hydrophobic surface 1030 (shown shaded) in a spill containment pattern on the top surface of the shelf to provide the spill containment functions. In FIGS. 3 and 4, the spill containment pattern of the hydrophobic surface 1030 consists of a frame-like border around the outer perimeter of the top surface of a shelf 1024. As with other known assemblies, the shelf assembly 1020 may also include side plates 1022. A soda can 1026 turned on its side is shown on the surface of the shelf 1024, and spilled liquid from the soda can 1026 is illustrated as liquid 1028.

FIG. 3 also illustrates the concept that the hydrophobic surface 1030 will form a spill containment barrier for the spilled liquid 1028. In this manner, the spilled liquid 1028 is prevented from spilling downwardly onto other surfaces below the shelf, and the spilled liquid 1028 is contained on the top surface of the shelf 1020. Further, the spilled liquid 1028 is also prevented from seeping into cracks or crevices in a manner where substantial bacteria, mold, and other undesirable materials can form. In particular, and in accordance with the preferred embodiments, it should be noted that components such as a plastic rim (or even a frame) may be completely unnecessary with the use of the hydrophobic surface 1030 to provide the spill containment feature.

In addition to the embodiment shown in FIGS. 3 and 4, the hydrophobic surface 1030 may be provided on the top surface of the shelf 1024 in a grid-like spill containment pattern as described herein and as shown in FIG. 5. FIG. 6 shows yet another variation in which a first hydrophobic surface border is spaced along the perimeter of the shelf, and a second hydrophobic surface border 1030 is spaced inwardly slightly from the edge of the shelf. The second hydrophobic surface border could be used without the first, but is advantageously used in combination with the first, with a containment area being located between the two borders. The second hydrophobic surface border thus defines an inner spill containment area, and the space between the two borders defines an outer spill containment area, to capture any spill overflow which might escape over the inner border.

The hydrophobic surface arranged in a spill containment pattern in accordance with the preferred embodiments described herein eliminates the need for plastic encapsulation material to create a spill containment barrier. Accordingly, the shelves produced in accordance with the preferred embodiments described herein utilize relatively less material than prior art spill-containing shelves. Further, the shelves described herein have no need for silicone sealants to create a spill containment barrier. With the exception of the hydrophobic tape embodiment, they have no need for adhesives to create a spill containment barrier. Elimination of the need for these materials also results in relatively less use of material. Further, using the hydrophobic surfaces arranged in a spill containment pattern in accordance with the preferred embodiments eliminates the need for formed lips or ridges on the shelf s top surface, which reduces the amount of material used and the complexity of manufacturing, and, therefore, reduces the manufacturing cost.

Elimination of plastic encapsulation and sealants from the design of the shelf member also eliminates a potential source of failure or leakage since the sealants and plastic encapsulation may have cracks or crevices where they join with the shelf member in which organic or inorganic materials may become entrapped and involve a bond area to the shelf member which may eventually leak. Still further, by eliminating the space taken up by plastic encapsulation, sealants, adhesives, or formed lips and ridges, the relative amount of usable shelf space is increased on a shelf in accordance with the preferred embodiments described herein. Still further, the use of hydrophobic surfaces arranged in a spill containment pattern retains an amount of liquid comparable to that retained by prior art shelves having spill containing dam features, without the necessity of using the dams.

As earlier described herein, the hydrophobic surface arranged in a spill containment pattern in accordance with the preferred embodiments provides a spill containment feature which prevents spilled liquids from leaking off of the top surface of the shelf, and shelves in accordance with the preferred embodiments can be used in various applications, such as refrigerator shelves.

It will be apparent to those skilled in the pertinent arts that other embodiments of shelving members in accordance with the invention may be designed. That is, the principles of shelving members in accordance with the invention are not limited to the specific embodiments described herein. For example, shelf members having a hydrophobic spill containment surfaces could be used in various settings, such as shelving in other settings, and are not limited to use as refrigerator shelves.

## Claims

1. A shelving assembly comprising a bracket for supporting a shelf (1024) and the shelf (1024), wherein the shelf (1024) comprises a flat top surface which is capable of supporting articles which may be placed on said shelf,
**characterized in that**
the shelf comprises a hydrophobic surface (1030) which is arranged in a spill containment pattern on said top surface, wherein a majority of the top surface is not hydrophobic, thereby defining one or more non-hydrophobic spill containment areas bounded by said spill containment pattern of the hydrophobic surface, wherein the hydrophobic surface (1030) is created by a hydrophobic or super hydrophobic surface treatment of the top surface .

2. The shelving assembly (1024) of claim 1 wherein said spill containment pattern is a continuous border which defines a single non-hydrophobic spill containment area within said border, and in particular, wherein said spill containment pattern is a continuous border located near the perimeter of the top surface, optionally located along the perimeter of the top surface.

3. The shelving assembly (1024) of claim 1 wherein said spill containment pattern comprises two spaced continuous borders, a first being a continuous border located along the perimeter of the top surface, and the second being a continuous border spaced inwardly from said first border, such that the second border circumscribes an inner spill containment area, and the first and second borders together define between them an outer spill containment area for containing overflow from said inner containment area.

4. The shelving assembly (1024) of claim 1 wherein said spill containment pattern is in the form of a grid pattern on the top surface and wherein said grid pattern defines more than one non-hydrophobic spill containment area on the top surface.

5. The shelving assembly (1024) of claim 1, which is adapted for use as a refrigerator shelf.

6. The shelving assembly (1024)of claim 1 wherein said top surface is comprised of a material chosen from the group consisting of glass, plastic, metal and combinations thereof.

7. The shelving assembly (1024) of claim 5 wherein the top surface is transparent, and in particular, is glass.

8. The shelving assembly (1024) of claim 5 wherein the hydrophobic surface (1030) is transparent.

9. The shelving assembly (1024) of claim 6 wherein at least some portions of the hydrophobic surfaces are colored, and in particular, wherein the hydrophobic surface (1030) contains a colored portion in a form chosen from the group consisting of a pattern, a company name, a company logo and combinations thereof.

10. The shelving assembly (1024) of claim 1 wherein the hydrophobic surface (1030) comprises:
a frit layer adjacent to the top surface; and
a hydrophobic compound coated over the frit layer.

11. The shelving assembly (1024) of claim 10 wherein said frit layer contains additive particles that create roughness in the top surface of the frit layer, and in particular, wherein optionally at least a portion of said frit layer is colored.

12. The shelving assembly (1024) of claim 1, wherein said hydrophobic surface (1030) comprises a hydrophobic coating over a roughened area in the top surface, and in particular, wherein said roughened area is made by binding particles to the top surface.

13. The shelving assembly (1024) of claim 1 wherein said hydrophobic surface (1030) comprises a coating of hydrophobic particles on the top surface.

14. The shelving assembly (1024) of claim 1 wherein said hydrophobic surface (1030) comprises a hydrophobic compound applied over or within the matrix of a cured sol gel composition.

15. The shelving assembly (1024) of claim 1 wherein said hydrophobic surface (1030) comprises a metal oxide primer with an integrated hydrophobic compound.

16. The shelving assembly (1024) of claim 1 wherein said hydrophobic surface (1030) comprises a hydrophobic coating applied over a metal oxide primer.

17. The shelving assembly (1024) of claim 1 wherein said hydrophobic surface (1030) comprises a hydrophobic compound comprising a variety of molecular chain lengths to create a coating with surface irregularities.

18. A method of containing liquid spills on a shelf (1024) of a shelving assembly according to any of claims 1 to 17, the method comprising:
providing the shelf;
applying the hydrophobic surface (1030) arranged in a spill containment pattern on said top surface;
leaving the majority of said top surface non- hydrophobic, thereby providing one or more non-hydrophobic spill containment areas bounded by the spill containment pattern of the hydrophobic surface (1030).

19. The method of claim 18 wherein the step of applying a hydrophobic surface (1030) comprises:
applying a frit to the top surface in a spill containment pattern;
sintering the frit to the top surface;
applying a hydrophobic compound to the sintered frit; and
curing the hydrophobic compound.

## Patentansprüche

1. Regalbrettanordnung mit einem Träger zum Tragen eines Regalbrettes (1024) und dem Regalbrett (1024), wobei das Regalbrett (1024) eine flache obere Oberfläche aufweist, die in der Lage ist, Gegenstände zu tragen, die auf dem Regalbrett platziert werden können,
**dadurch gekennzeichnet, dass**
das Regalbrett eine hydrophobe Oberfläche (1030) aufweist, die in einem Überlaufaufnahmemuster auf der oberen Oberfläche angeordnet ist, wobei ein Großteil der oberen Oberfläche nicht hydrophob ist, wodurch ein oder mehrere nicht-hydrophobe Überlaufauffangbereiche definiert werden, die durch das Überlaufauffangmuster der hydrophoben Oberfläche begrenzt werden, wobei die hydrophobe Oberfläche (1030) durch eine hydrophobe oder superhydrophobe Oberflächenbehandlung der oberen Oberfläche erzeugt wird.

2. Regalbrettanordnung (1024) nach Anspruch 1, wobei das Überlaufaufnahmemuster eine durchgehende Umrandung ist, die einen einzelnen nicht-hydrophoben Überlaufauffangbereich innerhalb der Umrandung definiert, und wobei das Überlaufaufnahmemuster insbesondere eine durchgehende Umrandung ist, die sich in der Nähe des Umfangs der oberen Oberfläche befindet, optional entlang des Umfangs der oberen Oberfläche angeordnet ist.

3. Regalbrettanordnung (1024) nach Anspruch 1, bei der das Überlaufaufnahmemuster zwei beabstandete kontinuierliche Umrandungen aufweist, wobei die erste eine kontinuierliche Umrandung ist, die sich entlang des Umfangs der oberen Oberfläche befindet, und die zweite eine kontinuierliche Umrandung ist, die von der ersten Umrandung nach innen beabstandet ist, so dass die zweite Umrandung einen inneren Überlaufauffangbereich umschreibt, und die erste und die zweite Umrandung zusammen zwischen sich einen äußeren Überlaufauffangbereich zum Auffangen von Überlauf aus dem inneren Auffangbereich definieren.

4. Regalbrettanordnung (1024) nach Anspruch 1, bei der das Überlaufaufnahmemuster in Form eines Gittermusters auf der oberen Oberfläche vorliegt und bei der das Gittermuster mehr als einen nicht-hydrophoben Überlaufauffangbereich auf der oberen Oberfläche definiert.

5. Regalbrettanordnung (1024) nach Anspruch 1, die zur Verwendung als Kühlregal geeignet ist.

6. Regalbrettanordnung (1024) nach Anspruch 1, wobei die obere Oberfläche aus einem Material aufgebaut ist, das aus der Gruppe bestehend aus Glas, Kunststoff, Metall und Kombinationen ausgewählt ist.

7. Regalbrettanordnung (1024) nach Anspruch 5, wobei die obere Oberfläche transparent ist und insbesondere Glas ist.

8. Regalbrettanordnung (1024) nach Anspruch 5, wobei die hydrophobe Oberfläche (1030) transparent ist.

9. Regalbrettanordnung (1024) nach Anspruch 6, wobei mindestens einige Abschnitte der hydrophoben Oberflächen gefärbt sind und insbesondere die hydrophobe Oberfläche (1030) einen gefärbten Abschnitt in einer Form enthält, die aus der Gruppe ausgewählt ist, die aus folgendem besteht: einem Muster, einem Firmennamen, einem Firmenlogo und Kombinationen davon.

10. Regalbrettanordnung (1024) nach Anspruch 1, wobei die hydrophobe Oberfläche (1030) umfasst:
eine an die obere Oberfläche angrenzende Frittenschicht; und
eine hydrophobe Verbindung, die auf die Frittenschicht aufgetragen wird.

11. Regalbrettanordnung (1024) nach Anspruch 10, wobei die Frittenschicht Additivteilchen enthält, die eine Rauhigkeit in der oberen Oberfläche der Frittenschicht erzeugen, und insbesondere, wobei gegebenenfalls mindestens ein Teil der Frittenschicht gefärbt ist.

12. Regalbrettanordnung (1024) nach Anspruch 1, wobei die hydrophobe Oberfläche (1030) eine hydrophobe Beschichtung über einem aufgerauhten Bereich in der oberen Oberfläche umfasst, und insbesondere, wobei der aufgerauhte Bereich durch Bindung von Partikeln an die obere Oberfläche hergestellt ist.

13. Regalbrettanordnung (1024) nach Anspruch 1, wobei die hydrophobe Oberfläche (1030) eine Beschichtung aus hydrophoben Partikeln auf der oberen Oberfläche umfasst.

14. Regalbrettanordnung (1024) nach Anspruch 1, wobei die hydrophobe Oberfläche (1030) eine hydrophobe Verbindung umfasst, die über oder innerhalb der Matrix einer gehärteten Sol-Gel-Zusammensetzung aufgebracht ist.

15. Regalbrettanordnung (1024) nach Anspruch 1, wobei die hydrophobe Oberfläche (1030) einen Metalloxidprimer mit einer integrierten hydrophoben Verbindung umfasst.

16. Regalbrettanordnung (1024) nach Anspruch 1, wobei die hydrophobe Oberfläche (1030) eine hydrophobe Beschichtung umfasst, die über einem Metalloxidprimer aufgebracht ist.

17. Regalbrettanordnung (1024) nach Anspruch 1, wobei die hydrophobe Oberfläche (1030) eine hydrophobe Verbindung umfasst, die eine Vielzahl von Molekülkettenlängen umfasst, um eine Beschichtung mit Oberflächenunregelmäßigkeiten zu erzeugen.

18. Verfahren zur Aufnahme von Flüssigkeitsüberläufen auf einem Regalbrett (1024) einer Regalbrettanordnung nach einem der Ansprüche 1 bis 17, wobei das Verfahren umfasst:
Bereitstellen des Regalbretts;
Aufbringen der hydrophoben Oberfläche (1030), die in einem Überlaufaufnahmemuster angeordnet ist, auf die obere Oberfläche;
Belassen des Großteils der oberen Oberfläche nicht-hydrophob, wodurch ein oder mehrere nicht-hydrophobe Überlaufauffangbereiche bereitgestellt werden, die durch das Überlaufaufnahmemuster der hydrophoben Oberfläche (1030) begrenzt werden.

19. Verfahren nach Anspruch 18, wobei der Schritt des Aufbringens einer hydrophoben Oberfläche (1030) umfasst:
Aufbringen einer Fritte auf die obere Oberfläche in einem Überlaufaufnahmemuster;
Sintern der Fritte auf die obere Oberfläche;
Aufbringen einer hydrophoben Verbindung auf die gesinterte Fritte; und
Aushärtung der hydrophoben Verbindung.

## Revendications

1. Ensemble de rayonnage comprenant une console pour porter une étagère (1024) et l'étagère (1024), dans lequel l'étagère (1024) comprend une surface supérieure plate qui est capable de porter des articles qui peuvent être placés sur ladite étagère, **caractérisé en ce que** l'étagère comprend une surface hydrophobe (1030) qui est disposée selon un motif de retenue de liquide renversé sur ladite surface supérieure, dans lequel une majorité de la surface supérieure n'est pas hydrophobe, définissant ainsi une ou plusieurs zones de retenue de liquide renversé non hydrophobe délimitées par ledit motif de retenue de liquide renversé de la surface hydrophobe, dans lequel la surface hydrophobe (1030) est créée par un traitement de surface hydrophobe ou super hydrophobe de la surface supérieure.

2. Ensemble de rayonnage (1024) selon la revendication 1, dans lequel ledit modèle de retenue de liquide renversé est une bordure continue qui définit une seule zone de retenue de liquide renversé non hydrophobe à l'intérieur de ladite bordure, et en particulier, dans lequel ledit modèle de retenue de liquide renversé est une bordure continue située près du périmètre de la surface supérieure, éventuellement située le long du périmètre de la surface supérieure.

3. Ensemble de rayonnage (1024) selon la revendication 1, dans lequel ledit modèle de retenue de liquide renversé comprend deux bordures continues espacées, une première étant une bordure continue située le long du périmètre de la surface supérieure, et la seconde étant une bordure continue espacée vers l'intérieur de ladite première bordure, de sorte que la seconde bordure circonscrit une zone de retenue interne de liquide renversé, et les première et seconde bordures définissent ensemble entre elles une zone de retenue externe de liquide renversé pour contenir le débordement de ladite zone de retenue interne.

4. Ensemble de rayonnage (1024) selon la revendication 1, dans lequel ledit modèle de retenue de liquide renversé se présente sous la forme d'un modèle de grille sur la surface supérieure et dans lequel ledit modèle de grille définit plus d'une zone de retenue de liquide renversé non hydrophobe sur la surface supérieure.

5. Ensemble de rayonnage (1024) selon la revendication 1, qui est adapté pour être utilisé comme étagère de réfrigérateur.

6. Ensemble de rayonnage (1024) selon la revendication 1, dans lequel ladite surface supérieure est constituée d'un matériau choisi dans le groupe constitué par le verre, le plastique, le métal et leurs combinaisons.

7. Ensemble de rayonnage (1024) selon la revendication 5, dont la surface supérieure est transparente et, en particulier, en verre.

8. Ensemble de rayonnage (1024) selon la revendication 5 dans lequel la surface hydrophobe (1030) est transparente.

9. Ensemble de rayonnage (1024) selon la revendication 6, dans lequel au moins certaines parties des surfaces hydrophobes sont colorées, et en particulier, dans lequel la surface hydrophobe (1030) contient une partie colorée sous une forme choisie dans le groupe constitué par un motif, un nom de société, un logo de société et des combinaisons de ceux-ci.

10. Ensemble de rayonnage (1024) selon la revendication 1, dans lequel la surface hydrophobe (1030) comprend:
une couche de fritte adjacente à la surface supérieure; et
un composé hydrophobe appliqué sur la couche de fritte.

11. Ensemble de rayonnage (1024) selon la revendication 10, dans lequel ladite couche de fritte contient des particules d'additif qui créent une rugosité dans la surface supérieure de la couche de fritte, et en particulier, dans lequel éventuellement au moins une partie de ladite couche de fritte est colorée.

12. Ensemble de rayonnage (1024) selon la revendication 1, dans lequel ladite surface hydrophobe (1030) comprend un revêtement hydrophobe sur une zone rugueuse dans la surface supérieure, et en particulier, dans lequel ladite zone rugueuse est réalisée en liant des particules à la surface supérieure.

13. Ensemble de rayonnage (1024) selon la revendication 1, dans lequel ladite surface hydrophobe (1030) comprend un revêtement de particules hydrophobes sur la surface supérieure.

14. Ensemble de rayonnage (1024) selon la revendication 1, dans lequel ladite surface hydrophobe (1030) comprend un composé hydrophobe appliqué sur ou dans la matrice d'une composition sol-gel durcie.

15. Ensemble de rayonnage (1024) selon la revendication 1, dans lequel ladite surface hydrophobe (1030) comprend un apprêt à base d'oxyde métallique avec un composé hydrophobe intégré.

16. Ensemble de rayonnage (1024) selon la revendication 1, dans lequel ladite surface hydrophobe (1030) comprend un revêtement hydrophobe appliqué sur une couche primaire d'oxyde métallique.

17. Ensemble de rayonnage (1024) selon la revendication 1, dans lequel ladite surface hydrophobe (1030) comprend un composé hydrophobe comprenant une variété de longueurs de chaînes moléculaires pour créer un revêtement avec des irrégularités de surface.

18. Procédé pour contenir de liquide renversé de liquide sur une étagère (1024) d'un ensemble de rayonnages selon l'une quelconque des revendications 1 à 17, le procédé comprenant les opérations suivantes:
fournir l'étagère;
appliquer la surface hydrophobe (1030) disposée selon un motif de retenue de liquide renversé sur ladite surface supérieure;
laisser la majorité de ladite surface supérieure non hydrophobe, ce qui permet de disposer d'une ou plusieurs zones de retenue de liquide renversé non hydrophobes délimitées par le modèle de retenue de liquide renversé de la surface hydrophobe (1030).

19. Procédé selon la revendication 18, dans lequel l'étape d'application d'une surface hydrophobe (1030) comprend:
l'application d'une fritte sur la surface supérieure selon un modèle de retenue de liquide renversé;
le frittage de la fritte à la surface supérieure;
l'application d'un composé hydrophobe sur la fritte; et
le traitement de la substance hydrophobe.
